# EUROPÄISCHE PATENTSCHRIFT

(11) **EP 3 972 887 B1**
(45) Veröffentlichungstag und Bekanntmachung des Hinweises auf die Patenterteilung: **07.01.2026**
(21) Anmeldenummer: 20729650.0
(22) Anmeldetag: 20.05.2020
(51) Int. Cl.: B62D 15/02, B60W 30/06

(54) **VERFAHREN ZUM BETRIEB EINES KRAFTFAHRZEUGS, KRAFTFAHRZEUG UND COMPUTERPROGRAMMPRODUKT**
METHOD FOR OPERATING A MOTOR VEHICLE, MOTOR VEHICLE, AND COMPUTER PROGRAM PRODUCT
PROCÉDÉ POUR FAIRE FONCTIONNER UN VÉHICULE À MOTEUR, VÉHICULE À MOTEUR ET PRODUIT-PROGRAMME INFORMATIQUE

(30) Priorität: 22.05.2019 DE 102019207485
(43) Veröffentlichungstag der Anmeldung: 30.03.2022
(73) Patentinhaber: Audi AG, 85045 Ingolstadt (DE)
(72) Erfinder: LIMBACHER, Reimund, 85055 Ingolstadt (DE); KRETSCHMANN, Philipp, 85077 Manching (DE)
(86) Internationale Anmeldenummer: PCT/EP2020/064110
(87) Internationale Veröffentlichungsnummer: WO 2020/234372

(56) Entgegenhaltungen:
- WO-A1-2019/080975
- WO-A1-2019/080975
- DE-A1- 102009 045 511
- DE-A1- 102010 053 037
- DE-A1- 102011 055 495
- US-A1- 2014 074 352
- US-A1- 2014 074 352
- US-A1- 2018 157 267
- US-A1- 2018 157 267

## Beschreibung

Die Erfindung betrifft ein Verfahren zum Betrieb eines Kraftfahrzeugs, ein Kraftfahrzeug und ein Computerprogrammprodukt.

Es sind diverse Assistenzfunktionen oder Assistenzsysteme bekannt, die die Bedienung eines Kraftfahrzeuges erleichtern sollen. Ausführungen solcher Assistenzfunktionen oder Assistenzsysteme sind beispielsweise in der DE 10 2011 055 495 A1, der DE 10 2009 045 511 A1 und der DE 10 2010 053 037 A1 beschrieben.

Eine große Anzahl von Kraftfahrzeugen der aktuellen Generation ist mit einem Fahrerassistenzsystem ausgestattet, welches einen Fahrer beim Einparken unterstützt. Ein solches Fahrerassistenzsystem wird auch Einparkhilfesystem oder Parkassistent genannt. Darüber hinaus werden für ein solches Fahrerassistenzsystem auch diverse herstellerspezifische Bezeichnungen verwendet, wie zum Beispiel Park-Distance-Control (PDC). Den meisten Ausführungsvarianten eines entsprechenden Fahrerassistenzsystem ist hierbei gemein, dass diese eine Umfeldsensorik aufweisen, mittels der Abstände zu Objekten im näheren Umfeld des Kraftfahrzeugs sensorisch erfasst werden und dass Informationen zu diesen Abständen über eine Ausgabeeinheit an den Fahrer des Kraftfahrzeugs ausgegeben werden. Hierbei werden die Informationen als akustische Informationen oder als optischen Informationen an den Fahrer ausgegeben und dementsprechend ist die Ausgabeeinheit dann zum Beispiel als Lautsprecher oder als Anzeigebildschirm ausgestaltet.

Weiter lässt sich die mittels des Fahrerassistenzsystems realisierte Assistenzfunktion oder das gesamte Fahrerassistenzsystem in den meisten Fällen über ein einfaches Bedienelement, beispielsweise einen Schalter oder Taster, aktivieren und deaktivieren, so sodass der Fahrer selbst entscheiden kann, wann er das Fahrerassistenzsystem oder die Assistenzfunktion nutzt und wann nicht.

Einige Ausgestaltungsvarianten bieten zudem die Möglichkeit, eine Automatikfunktion zu nutzen, die die Ausgabeeinheit automatisch aktiviert und deaktiviert, wenn eine bestimmte Bedingung erfüllt ist, beispielsweise wenn der Abstand zum nächstgelegenen Objekt einen Mindestwert unterschreitet.

Aufgabe der vorliegenden Erfindung ist es, ein vorteilhaftes Verfahren zum Betrieb eines Kraftfahrzeugs, ein vorteilhaftes Kraftfahrzeug und ein vorteilhaftes Computerprogrammprodukt anzugeben.

Diese Aufgabe wird durch ein Verfahren mit den Merkmalen des Patentanspruchs 1, durch ein Kraftfahrzeug mit den Merkmalen des Patentanspruchs 10 und durch ein Computerprogrammprodukt mit den Merkmalen des Patentanspruchs 11 gelöst. Die im Hinblick auf das Verfahren angeführten Vorteile und bevorzugten Ausgestaltungen sind sinngemäß auch auf das Kraftfahrzeug und/oder das Computerprogrammprodukt übertragbar und umgekehrt. Vorteilhafte Ausgestaltungen mit zweckmäßigen Weiterbildungen der Erfindung sind in den abhängigen Patentansprüchen angegeben.

Das erfindungsgemäße Verfahren dient zum Betrieb eines Kraftfahrzeugs und insbesondere zur Realisierung einer Fahrerassistenzfunktion, mittels derer ein Fahrer beim Einparken des Kraftfahrzeugs unterstützt wird. Das erfindungsgemäße Kraftfahrzeug wiederum weist ein Fahrerassistenzsystem auf und ist eingerichtet, in zumindest einem Betriebsmodus das erfindungsgemäße Verfahren auszuführen. Dazu weist das Kraftfahrzeug typischerweise eine Datenverarbeitungseinheit mit einem ausführbaren Programm auf, welches nach einem Start das erfindungsgemäße Verfahren automatisch ausführt. Hierbei erfolgt der Start des Programms bevorzugt automatisch beim Starten des Kraftfahrzeugs und das Programm ist vorzugsweise mittels einer Software realisiert, die beispielsweise über ein erfindungsgemäßes Computerprogrammprodukt zur Verfügung gestellt wird und typischerweise auf der Datenverarbeitungseinheit installiert wird, damit das Programm nachfolgend auf der Datenverarbeitungseinheit ausführbar ist.

Das erfindungsgemäße Kraftfahrzeug weist nun, wie bereits zuvor dargelegt, ein Fahrerassistenzsystem auf, welches einen Fahrer beim Einparken des Kraftfahrzeugs unterstützt. Dementsprechend ist das Fahrerassistenzsystem als Einparkhilfesystem ausgebildet und die damit realisierte Fahrerassistenzfunktion oder Assistenzfunktion ist als Einparkhilfefunktion oder kurz Einparkhilfe ausgestaltet. Hierbei weist das Einparkhilfesystem eine Ausgabeeinrichtung auf, welche in einem aktivierten Zustand akustische und/oder optische Informationen als Hilfe beim Einparken ausgibt und welche in einem deaktivierten Zustand diese Informationen nicht ausgibt.

Dabei handelt es sich bei den akustischen Informationen beispielsweise um Piep-Töne und in diesem Fall weist die Ausgabeeinrichtung dann typischerweise zumindest einen Lautsprecher auf. Alternativ oder ergänzend zu solchen akustischen Informationen werden über die Ausgabeeinrichtung im aktivierten Zustand optische Informationen ausgegeben und hierzu weist dann die Ausgabeeinrichtung beispielsweise eine LED-Leiste auf. Bevorzugt ist weiter eine Ausführungsvariante, bei der die Ausgabeeinrichtung zur Ausgabe optischer Informationen einen Anzeigebildschirm oder ein Display aufweist, welches beispielsweise im Bereich der sogenannten Mittelkonsole des Kraftfahrzeugs angeordnet ist oder im Bereich der sogenannten Tachoeinheit. Alternativ ist ein solches Display zum Beispiel als sogenanntes Headup-Display ausgestaltet.

Bevorzugt unterstützt das Einparkhilfesystem hierbei den Fahrer lediglich durch die Ausgabe der akustischen und/oder optischen Information im aktivierten Zustand beim Einparken und nicht durch einen Eingriff in die Fahrzeugsteuerung. Das Einparkhilfesystem ist somit insbesondere nicht ausgebildet für eine automatische/autonome oder teilautomatische/teilautonome Fahrzeugführung beim Einparken.

Wird nun das erfindungsgemäße Verfahren ausgeführt, so werden durch das Einparkhilfesystem manuelle Wechsel zwischen dem aktivierten Zustand und dem deaktivierten Zustand erfasst und auf der Basis erfasster manueller Wechsel werden Empfehlungen ausgegeben für die Nutzung, also insbesondere die weitere Nutzung, des Einparkhilfesystems. Dabei wird bei einer Erfassung einer vorgegebenen Wechselcharakteristik für manuelle Wechsel zwischen dem aktivierten Zustand und dem deaktivierten Zustand eine Empfehlung ausgegeben für einen Wechsel zwischen einem Automatik-Modus und einem Manuell-Modus des Einparkhilfesystems. Hierbei stellen dann der Automatik-Modus und der Manuell-Modus zwei Betriebsmodi oder Betriebsweisen des Einparkhilfesystems dar, wobei im Automatik-Modus automatisch zwischen dem aktivierten Zustand und dem deaktivierten Zustand der Ausgabeeinrichtung gewechselt wird und wobei im Manuell-Modus kein automatischer Wechsel erfolgt.

Mit dem Automatik-Modus wird somit typischerweise eine zusätzliche Hilfsfunktion realisiert, nämlich eine Wechselautomatik, durch die die Ausgabeeinrichtung im Automatik-Modus gesteuert wird. Dabei erfolgt bevorzugt eine Steuerung derart, dass erst unter einer vorgegebenen Bedingung automatisch ein Wechsel vom aktivierten Zustand in den deaktivierten Zustand oder ein Wechsel vom deaktivierten Zustand in den aktivierten Zustand vorgenommen wird.

Bei der vorgegebenen Bedingung handelt es sich dann bevorzugt um einen Schwellwert für den Abstand zum nächstgelegenen Objekt im Umfeld des Kraftfahrzeugs, also beispielsweise zu einem anderen Kraftfahrzeug, zu einer Wand, zu einer Person oder zu irgendeinem anderen Objekt. Dementsprechend weist das erfindungsgemäße Kraftfahrzeug bevorzugt eine Umfeldsensorik auf, mittels der das Umfeld oder die Umgebung des Kraftfahrzeugs in zumindest einem Betriebsmodus und typischerweise standardmäßig während des Betriebs des Kraftfahrzeugs überwacht wird und mittels der zweckdienlicherweise die Abstände zu Objekten im nahen Umfeld des Kraftfahrzeugs messtechnisch erfasst werden. Diese Informationen werden im Einparkhilfesystem weiterverarbeitet oder ausgewertet und wenn dann der Abstand zu einem Objekt in der Umgebung den vorgegebenen Schwellwert unterschreitet, wird die Ausgabeeinrichtung automatisch vom deaktivierten Zustand in den aktivierten Zustand versetzt, sofern sich das Einparkhilfesystem im Automatik-Modus befindet. Wird der Schwellwert wieder überschritten, so erfolgt dann typischerweise automatisch wieder ein Wechsel vom aktivierten Zustand in den deaktivierten Zustand. Der Schwellwert, nämlich der erste Schwellwert, beträgt hierbei zum Beispiel etwa 100 cm.

Weiter bevorzugt ist zudem ein zweiter Schwellwert oder Mindestabstand vorgegeben von beispielsweise etwa 30 cm und bei einer Unterschreitung des zweiten Mindestabstands erfolgt in jedem Fall ein automatischer Wechsel in den aktivierten Zustand der Ausgabeeinrichtung, und zwar bevorzugt unabhängig vom aktuellen Betriebsmodus des Einparkhilfesystems und/oder unabhängig von möglichen Ausnahmen.

Je nach Ausführungsvariante ist eine derartige Wechselautomatik davon unabhängig bevorzugt derart ausgestaltet, dass der vorgegebene Schwellwert lediglich berücksichtigt wird, wenn im Fahrzeug kein Rückwärtsgang eingelegt ist. Wird dagegen ein Rückwärtsgang eingelegt, unabhängig davon, ob im Kraftfahrzeug ein manuelles Getriebe oder ein Automatikgetriebe verbaut ist, erfolgt vorzugsweise unabhängig vom vorgegebenen Schwellwert und weiter bevorzugt unabhängig vom aktuellen Betriebsmodus des Einparkhilfesystems und/oder unabhängig von möglichen Ausnahmen in jedem Fall automatisch einen Wechsel vom deaktivierten Zustand in den aktivierten Zustand.

Eine solche Wechselautomatik unterstützt den Fahrer bei der Nutzung des Einparkhilfesystems. Allerdings gibt es Situationen, in denen durch die Wechselautomatik ein Wechsel vorgenommen wird, obwohl dies für den Fahrer nicht hilfreich ist. Dies ist zum Beispiel der Fall, wenn sich das Kraftfahrzeug beispielsweise an einer Ampel einem anderen Kraftfahrzeug im Vorfeld des Kraftfahrzeugs annähert und hinter diesen zum stehen kommt. Auch in Stau-Situationen ist ein entsprechender automatischer Wechsel in der Regel nicht hilfreich und kann auf den Fahrer sogar störend wirken.

Aus diesem Grund ist das erfindungsgemäße Kraftfahrzeug bevorzugt derart eingerichtet, dass der Fahrer diese Wechselautomatik deaktivieren oder abschalten kann, indem dieser den Automatik-Modus abgewählt und den Manuell-Modus auswählt. Hierzu weist das Kraftfahrzeug typischerweise einen Bordcomputer auf, über den der Fahrer den Modus wechseln kann, über den der Modus also wechselbar ist.

Darüber hinaus besteht für den Fahrer vorzugsweise die Möglichkeit, die Ausgabeeinrichtung vom aktivierten Zustand in den deaktivierten Zustand oder vom deaktivierten Zustand in den aktivierten Zustand zu versetzen, beispielsweise über einen Schalter oder Taster an der Mittelkonsole des Kraftfahrzeugs oder über eine Lenkradtaste, wobei der Fahrer für einen Wechsel den Taster bzw. die Lenkradtaste vorzugsweise lediglich antippen muss. Hierbei erfolgt jedoch bevorzugt lediglich ein Wechsel zwischen aktivierten Zustand und deaktivierten Zustand der Ausgabeeinrichtung und kein Wechsel zwischen dem Automatik-Modus und dem Manuell-Modus und dementsprechend erfolgt dann ein erneuter automatischer Wechsel zwischen dem aktivierten Zustand und dem deaktivierten Zustand der Ausgabeeinrichtung sobald das nächste Mal die vorgegebenen Bedingungen für einen automatischen Wechsel erfüllt sind.

Um den Fahrer nun zusätzlich bei der Nutzung des Einparkhilfesystems zu unterstützen werden nun bei Ausführung des erfindungsgemäßen Verfahrens die manuellen Wechsel zwischen dem aktivierten Zustand und dem deaktivierten Zustand der Ausgabeeinrichtung durch den Fahrer erfasst und wenn eine vorgegebene Wechselcharakteristik erkannt wird, wird eine Empfehlung in akustischer und/oder optischer Form an den Fahrer ausgegeben, zwischen dem Automatik-Modus und dem Manuell-Modus zu wechseln.

Bevorzugt werden hierbei lediglich diejenigen manuellen Wechsel zwischen dem aktivierten Zustand und dem deaktivierten Zustand der Ausgabeeinrichtung erfasst und/oder verarbeitet und/oder ausgewertet, die innerhalb eines vorgegebenen ersten Zeitintervalls T1 nach einem automatischen Wechsel erfolgen. Als erstes Zeitintervall T1 wird dabei vorzugsweise ein Intervall von etwa 10s vorgegeben und insbesondere von etwa 5s. In solchen Fällen reagiert der Fahrer also recht schnell auf einen automatischen Wechsel, wobei er den automatischen Wechsel durch einen manuellen Wechsel quasi wieder rückgängig macht. Daher ist gerade in diesen Fällen davon auszugehen, dass der automatische Wechsel unerwünscht erfolgt ist.

Weiter wird gemäß einer Ausführungsvariante die vorgegebene Wechselcharakteristik erfasst oder erkannt, wenn innerhalb eines vorgegebenen zweiten Zeitintervalls T2 mehrmals, typischerweise mehr als zweimal und insbesondere zumindest fünfmal, ein manueller Wechsel vom aktivierten Zustand in den deaktivierten Zustand vorgenommen wird oder wenn innerhalb des vorgegebenen zweiten Zeitintervalls T2 mehrmals, typischerweise mehr als zweimal und insbesondere zumindest fünfmal, ein Wechsel vom deaktivierten Zustand in den aktivierten Zustand vorgenommen wird.

Von Vorteil ist außerdem eine Ausführungsvariante, bei der ergänzend zu der zuvor beschriebenen Erfassung der manuellen Wechsel und der Ausgabe von Empfehlungen bei Ausführung des erfindungsgemäßen Verfahrens in einem Lern-Modus des Einparkhilfesystems Ausnahmen erlernt werden, bei denen entweder ausnahmsweise ein automatischer Wechsel zwischen dem aktivierten Zustand und dem deaktivierten Zustand erfolgt oder aber bei denen ausnahmsweise kein automatischer Wechsel zwischen dem aktivierten Zustand und dem deaktivierten Zustand erfolgt.

Mit dem Lern-Modus wird eine Art adaptive Wechselautomatik realisiert, wobei der Lern-Modus je nach Ausführungsvariante den zuvor beschriebenen Automatik-Modus ersetzt. Alternativ ersetzt der Lern-Modus den zuvor genannten Manuell-Modus oder aber der Lern-Modus ergänzt den Automatik-Modus und den Manuell-Modus als zusätzlicher Betriebsmodus, sodass in diesem Fall dann der Fahrer zwischen drei verschiedenen Betriebsmodi auswählen kann. Vorteilhaft ist auch eine Ausführungsvariante, bei der der Lern-Modus sowohl den Automatik-Modus als auch den Manuell-Modus ersetzt und somit als einziger Betriebsmodus zur Verfügung steht.

Zweckdienlicherweise werden auch im Lern-Modus des Einparkhilfesystems durch das Einparkhilfesystem manuelle Wechsel zwischen dem aktivierten Zustand und dem deaktivierten Zustand erfasst. In diesem Fall werden dann auf der Basis der erfassten manuellen Wechsel die Ausnahmen erlernt. Bevorzugt werden hierbei lediglich diejenigen manuellen Wechsel zwischen dem aktivierten Zustand und dem deaktivierten Zustand der Ausgabeeinrichtung erfasst und/oder verarbeitet und/oder ausgewertet, die innerhalb eines vorgegebenen ersten Zeitintervalls T1 nach einem automatischen Wechsel erfolgen. Als erstes Zeitintervall T1 wird dabei vorzugsweise ein Intervall von etwa 10s vorgegeben und insbesondere von etwa 5s.

Davon unabhängig ist eine jede Ausnahme typischerweise durch einen Datensatz definiert, der in einem Speicher des Einparkhilfesystems, insbesondere in einem Speicher einer Datenverarbeitungseinheit des Einparkhilfesystems, hinterlegt ist, der also beim Erlernen der entsprechenden Ausnahme im Speicher hinterlegt wurde.

Von Vorteil ist es weiter, wenn das Kraftfahrzeug ein System zur Ortsbestimmung des Kraftfahrzeugs, beispielsweise ein GPS-System, aufweist. Dieses System ist dabei beispielsweise Teil eines Navigationssystems des Kraftfahrzeugs. In diesem Fall werden dann weiter bevorzugt im Lern-Modus des Einparkhilfesystems durch das Einparkhilfesystem Ortsdaten zu einem Ort erfasst oder ermittelt, an dem ein manueller Wechsel zwischen dem aktivierten Zustand und dem deaktivierten Zustand vorgenommen wird. Ein solcher Ort wird dann weiter bevorzugt im Lern-Modus des Einparkhilfesystems als Ausnahme erlernt, zumindest wenn dieser Ort zum wiederholten Male angefahren wird und wenn zum wiederholten Male ein manueller Wechsel zwischen dem aktivierten Zustand und dem deaktivierten Zustand an diesen Ort vorgenommen wird. Das System erkennt oder erlernt somit, dass an einem bestimmten Ort automatische Wechsel unerwünscht sind, wenn der Fahrer immer wieder an diesem Ort manuelle Wechsel vornimmt.

Günstig ist hierbei eine Ausführungsvariante, bei der im Lern-Modus des Einparkhilfesystems standardmäßig kein automatischer Wechsel vom deaktivierten Zustand in den aktivierten Zustand erfolgt, bei dem im Lern-Modus Ausnahmen erlernt werden, bei denen ausnahmsweise ein automatischer Wechsel vom deaktivierten Zustand in den aktivierten Zustand erfolgt, wobei Orte als Ausnahmen erlernt werden, die zum wiederholten Male angefahren werden und an denen zum wiederholten Male ein manueller Wechsel vom deaktivierten Zustand in den aktivierten Zustand vorgenommen wird. An diesem Ort erfolgt dann nachfolgend aufgrund der erlernten Ausnahme ein automatischer Wechsel vom deaktivierten Zustand in den aktivierten Zustand, wenn sich das Kraftfahrzeug erneut an diesem Ort befindet.

Ein automatischer Wechsel erfolgt dabei auch hier weiter bevorzugt erst dann, wenn sich das Kraftfahrzeug an einem als Ausnahme erlernten Ort einem Objekt in der näheren Umgebung auf einen vorgegebenen Mindestabstand, insbesondere den zuvor genannten ersten Schwellwert, annähert. In diesem Fall stellt dann der vorgegebene Mindestabstand eine Zusatzbedingungen dar. Als Mindestabstand wird dabei zum Beispiel ein Wert von etwa 100 cm vorgegeben.

Wird nun ein Ort als Ausnahme erlernt, so werden vorzugsweise Informationen zu diesem Ort im zuvor genannten Speicher abgespeichert. Diese Informationen beinhalten zum Beispiel einen Satz GPS-Koordinaten oder sind durch einen entsprechenden Satz GPS-Koordinaten ausgebildet. Da es sich bei einem erlernten Ort typischerweise nicht um eine Position sondern vielmehr um einen Raumbereich um eine Position herum handelt, ist weiter bevorzugt einen Radius vorgegeben, der definiert, wie weit sich ein Orts um eine Position herum, die beispielsweise durch GPS-Koordinaten definiert ist, erstreckt. Dieser Radius ist bevorzugt kleiner etwa 10 m und insbesondere kleiner etwa 5 m. Der Raumbereich ist somit vorzugsweise etwa so groß wie ein typischer Parkplatz oder Stellplatz für ein Kraftfahrzeug.

Gemäß einer vorteilhafter Weiterbildung wird ein Ort, der zum wiederholten Male angefahren wird und an dem zum wiederholten Male ein manueller Wechsel vom deaktivierten Zustand in den aktivierten Zustand vorgenommen wird, zunächst nur als potentielle Ausnahme erkannt und es wird daraufhin eine Eingabeaufforderung ausgegeben, durch die der Fahrer aufgefordert wird auszuwählen, ob die potentielle Ausnahme als Ausnahme erlernt werden soll oder nicht. Erst wenn der Fahrer dann die Auswahl trifft, dass der Ort als Ausnahme erlernt werden soll, wird der Ort tatsächlich als Ausnahme gespeichert und somit als aus Ausnahme.

Einer weiteren Ausführungsvariante entsprechend erfolgt eine solche Eingabeaufforderung bereits beim erstmaligen angefahren eines Ortes. Alternativ erfolgt eine solche Eingabeaufforderung beim erstmaligen angefahren lediglich bei bestimmten Orten, die beispielsweise als Sonderfälle identifiziert werden zum Beispiel auf der Basis von Informationen des Navigationssystems des Kraftfahrzeugs. So ist es zum Beispiel zweckdienlich Orte als Sonderfälle zu behandeln, an denen zum Beispiel Waschstraßen oder Parkhäuser stehen.

Darüber hinaus ist es von Vorteil, wenn der Fahrer die Möglichkeit hat, Orte direkt vorzugeben, an denen das Einparkhilfesystem eine Ausnahme machen soll. In diesem Fall werden dann quasi Ausnahmen durch den Fahrer manuell vorgegeben beispielsweise über ein Menü des Bordcomputers oder über das Navigationssystem. Alternativ oder ergänzend hierzu wird den Fahrer die Möglichkeit gegeben, Ausnahmen wieder zu löschen, also Orte wieder zu löschen, die als Ausnahmen abgespeichert sind.

Weiter ist zweckdienlich, das Anlegen mehrerer Profile für mehrere Fahrer zu ermöglichen, wobei dann jedes Profil eine eigene Liste von Ausnahmen umfasst. Eine solche Liste lässt sich dann weiter bevorzugt von einem Profil in ein anderes Profil übertragen und/oder in ein anderes Kraftfahrzeug oder an einen Server exportieren.

Außerdem wird es als vorteilhaft angesehen, wenn Ausnahmen mittels eines sogenannten Geo-Learning-Verfahrens/Geo-Fencing-Verfahrens, also beispielsweise mittels eines sogenannten DB-Scan-Verfahrens, erlernt werden.

Als zweckdienlich wird es außerdem angesehen, wenn beim Erlernen von Ausnahmen lediglich die zuvor beschriebenen manuellen Wechsel erfasst werden und ansonsten keine weiteren Aktivitäten des Fahrers, insbesondere keine weiteren Eingaben. Zudem werden bevorzugt lediglich Ortsdaten abgespeichert und auf diese Weise erlernt, also insbesondere lediglich ein Satz Ortskoordinaten pro Ausnahme.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnung. Dabei zeigt:

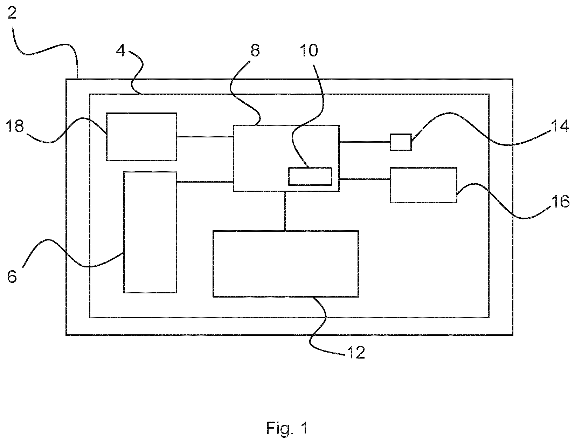

- Fig. 1: in einem Blockschaltbild ein Kraftfahrzeug mit einem Eiparkhilfesystem.

Ein nachfolgend exemplarisch beschriebenes Kraftfahrzeug 2 ist in Fig. 1 durch ein Blockschaltbild schematisch wiedergegeben und weist ein Einparkhilfesystem 4 auf. Teil des Einparkhilfesystems 4 sind eine Umfeldsensorik 6, eine Datenverarbeitungseinheit 8 mit einem Speicher 10, eine Ausgabeeinrichtung 12, ein Taster 14, eine Bedieneinheit 16 sowie ein Navigationssystem 18.

Die Ausgabeeinrichtung 12 ist dabei ausgebildet, in einem aktivierten Zustand akustische und optische Informationen als Hilfe beim Einparken an einen Fahrer auszugeben und in einem deaktivierten Zustand diese Informationen nicht auszugeben. Hierfür weist die Ausgabeeinrichtung 12 einen Anzeigebildschirm auf, an dem im aktivierten Zustand Bilder einer Umfeldkamera wiedergegeben werden, die Teil der Umfeldsensorik 6 ist. Ergänzend weist die Ausgabeeinrichtung 12 einen Lautsprecher auf, über den im aktivierten Zustand der Ausgabeeinrichtung 12 akustische Informationen in Form von Piep-Tönen ausgegeben werden.

Weiter ist das Einparkhilfesystem 4 im Ausführungsbeispiel derart eingerichtet, dass durch das Einparkhilfesystem 4 automatisch ein Wechsel vorgenommen wird zwischen dem aktivierten Zustand und dem deaktivierten Zustand der Ausgabeeinrichtung 12, wenn vorgegebene Bedingungen erfüllt sind. Außerdem ist das Einparkhilfesystem 4 für einen Betrieb in einem Lern-Modus eingerichtet, in dem Ausnahmen erlernt werden, bei denen entweder ausnahmsweise ein automatischer Wechsel zwischen dem aktivierten Zustand und dem deaktivierten Zustand erfolgt oder aber bei denen ausnahmsweise kein automatischer Wechsel erfolgt.

Gemäß einer ersten Ausführungsvariante erfolgt dabei standardmäßig kein automatischer Wechsel vom deaktivierten Zustand in den aktivierten Zustand und es werden Ausnahmen erlernt, bei denen ausnahmsweise ein automatischer Wechsel erfolgt. Dazu werden vom Einparkhilfesystem 4 manuelle Wechsel vom deaktivierten Zustand in den aktivierten Zustand erfasst, also Wechsel, die durch den Fahrer induziert werden. Dabei erfolgt ein manueller Wechsel, wenn der Fahrer den Taster 14 antippt, wobei ein Wechsel in den aktivierten Zustand erfolgt, wenn sich die Ausgabeeinrichtung 12 im deaktivierten Zustand befindet, und wobei ein Wechsel in den deaktivierten Zustand erfolgt, wenn sich die Ausgabeeinrichtung 12 im aktivierten Zustand befindet. Diese manuellen Wechsel werden vom Einparkhilfesystem 4 im Lern-Modus erfasst.

Bevorzugt werden hierbei lediglich diejenigen manuellen Wechsel zwischen dem aktivierten Zustand und dem deaktivierten Zustand der Ausgabeeinrichtung 12 erfasst und/oder verarbeitet und/oder ausgewertet, die innerhalb eines vorgegebenen ersten Zeitintervalls T1 nach einem automatischen Wechsel erfolgen. Als erstes Zeitintervall T1 wird dabei vorzugsweise ein Intervall von etwa 10s vorgegeben und insbesondere von etwa 5s.

Erfolgt nun ein manueller Wechsel in den aktivierten Zustand, so ermittelt das Einparkhilfesystem 4 mittels des Navigationssystems 18 den Ort, an dem der manuelle Wechsel erfolgt ist, und dieser Ort wird im Speicher 10 der Datenverarbeitungseinheit 8 abgespeichert. Hierzu wird zum Beispiel ein Satz GPS-Koordinaten im Speicher 10 abgespeichert. Erreicht dann zu einem späteren Zeitpunkt das Kraftfahrzeug 2 erneut einen im Speicher 10 hinterlegten Ort und wird an diesem Ort erneut ein manueller Wechsel in den aktivierten Zustand vorgenommen, so wird dieser Ort vom Einparkhilfesystem 4 als Ausnahme erlernt und dabei im Speicher 10 abgespeichert. Alternativ wird der Fahrer zunächst vom Einparkhilfesystem 4 aufgefordert zu entscheiden, ob der Ort als Ausnahme erlernt werden soll oder nicht, und nur wenn der Fahrer sich für Ersteres entscheidet, wird der Ort als Ausnahme im Speicher 10 hinterlegt und somit erlernt.

Wenn dann mit dem Kraftfahrzeug 2 ein als Ausnahme erlernten Ort erneut angefahren wird, so erfolgt durch das Einparkhilfesystem 4 ausnahmsweise ein automatischer Wechsel vom deaktivierten Zustand der Ausgabeeinrichtung 12 in den aktivierten Zustand, sobald ein vorgegebenen erster Mindestabstand von beispielsweise 100 cm zu einem Objekt in der Umgebung des Kraftfahrzeugs 2 unterschritten wird. Dabei wird mittels der Umfeldsensorik 6 zumindest im Lern-Modus das Umfeld oder die Umgebung des Kraftfahrzeugs 2 permanent überwacht und es werden Abstände zu Objekten in der Umgebung oder im Umfeld des Kraftfahrzeugs 2 ermittelt.

Weiter bevorzugt ist zudem ein zweiter Mindestabstand vorgegeben von beispielsweise 30 cm und bei einer Unterschreitung des zweiten Mindestabstands erfolgt in jedem Fall ein automatischer Wechsel in den aktivierten Zustand der Ausgabeeinrichtung 12 und zwar unabhängig davon, ob der Ort, an den sich das Kraftfahrzeug 2 gerade befindet, als Ausnahme im Speicher 10 hinterlegt ist oder nicht.

Einer alternativen Ausführungsvariante entsprechend erfolgt im Lern-Modus standardmäßig ein automatischer Wechsel vom deaktivierten Zustand in den aktivierten Zustand, sobald der vorgegebene erste Mindestabstand von beispielsweise 100 cm unterschritten wird. In diesem Fall erlernt das Einparkhilfesystem 4 dann Ausnahmen, bei denen ausnahmsweise kein automatischer Wechsel erfolgt. Wird hier zum wiederholten Male ein bestimmter Ort angefahren und erfolgt an diesem Ort zum wiederholten Male ein manueller Wechsel vom aktivierten Zustand in den deaktivierten Zustand nachdem durch das Einparkhilfesystem 4 ein automatischer Wechsel vom deaktivierten Zustand in den aktivierten Zustand vorgenommen wurde, so wird dieser Ort als Ausnahme erlernt und im Speicher 10 hinterlegt. Gemäß einer Variation dieser Ausführungsvariante wird wiederum der Fahrer zunächst dazu aufgefordert zu entscheiden, ob dieser Ort als Ausnahme erlernt werden soll oder nicht.

Weiter ist das Einparkhilfesystem 4 im Ausführungsbeispiel eingerichtet, für eine manuelle Bearbeitung der im Speicher 10 hinterlegten Ausnahmen. Dazu lässt sich zum Beispiel über die Bedieneinheit 16 ein Menü aufrufen und über die Ausgabeeinrichtung 12 eine Liste von Orten anzeigen, die als Ausnahmen abgespeichert sind. Mittels der Bedieneinheit 16 lassen sich dann Orte als Ausnahmen löschen und/oder hinzufügen, beispielsweise durch eine Ortsauswahl über das Navigationssystem 18.

Unabhängig davon ist das Einparkhilfesystem 4 je nach Ausführungsvariante für mehr als einem Betriebsmodus eingerichtet und in diesem Fall ist es dann dem Fahrer möglich, über die Bedieneinheit 16 einen Betriebsmodus auszuwählen oder zwischen den Betriebsmodi zu wechseln. Der Lern-Modus ist dabei einer der zur Verfügung stehenden Betriebsmodi. Ein weiterer Betriebsmodus ist zum Beispiel ein Manuell-Modus, bei dem grundsätzlich kein automatischer Wechsel zwischen dem aktivierten Zustand und dem deaktivierten Zustand der Ausgabeeinrichtung 12 erfolgt. Alternativ oder ergänzend hierzu ist als Betriebsmodus ein Automatik-Modus auswählbar, bei dem ohne Ausnahme automatisch ein Wechsel zwischen dem aktivierten und dem deaktivierten Zustand erfolgt, wenn der vorgegebene erste Mindestabstand unterschritten wird.

Einer weiteren Ausführungsvariante entsprechend ist das Einparkhilfesystem 4 für den zuvor genannten Automatik-Modus und den zuvor genannten Manuell-Modus eingerichtet, nicht aber zwingend für den Lern-Modus. Wird dann das Einparkhilfesystem mit einem dieser beiden Betriebsmodi betrieben, so werden manuelle Wechsel zwischen dem aktivierten Zustand und dem deaktivierten Zustand erfasst.

Bevorzugt werden hierbei wiederum lediglich diejenigen manuellen Wechsel zwischen dem aktivierten Zustand und dem deaktivierten Zustand der Ausgabeeinrichtung 12 erfasst und/oder verarbeitet und/oder ausgewertet, die innerhalb eines vorgegebenen ersten Zeitintervalls T1 nach einem automatischen Wechsel erfolgen. Als erstes Zeitintervall T1 wird dabei vorzugsweise ein Intervall von etwa 10s vorgegeben und insbesondere von etwa 5s.

Werden dann weiter innerhalb einer vorgegebenen zweiten Zeitspanne oder eines vorgegebenen zweiten Zeitintervalls T mehr als zwei manuelle Wechsel erfasst, wird vom Einparkhilfesystem 4 eine Empfehlung ausgegeben, zwischen dem Automatik-Modus und dem Manuell-Modus zu wechseln.

Befindet sich das Einparkhilfesystem 4 also beispielsweise im Automatik-Modus und schaltet der Fahrer durch Betätigung des Tasters 14 die Ausgabeeinrichtung 12 innerhalb des zweiten Zeitintervalls T2 mehr als zweimal manuell in den deaktivierten Zustand nachdem ein automatischer Wechsel in den aktivierten Zustand erfolgt ist, so wird eine Empfehlung ausgegeben, in den Manuell-Modus zu wechseln. Andersherum wird eine Empfehlung ausgegeben, in den Automatik-Modus zu wechseln, wenn innerhalb der Zeitspanne T2 mehr als zweimal ein manueller Wechsel in den aktivierten Zustand erfolgt. Allerdings werden bei der Zählung der manuellen Wechsel, wie bereits zuvor dargelegt, bevorzugt nur diejenigen manuellen Wechsel berücksichtigt und somit erfasst, die innerhalb des ersten Zeitintervalls T1 nach einem automatischen Wechsel erfolgen.

Als Zeitintervall ist dabei zum Beispiel ein Intervall von 10 Minuten oder 20 min vorgegeben und je nach Ausführungsvariante wird die Empfehlung beispielsweise durch eine Sprachausgabe über den Lautsprecher ausgegeben und/oder durch eine Mitteilung am Anzeigebildschirm.

Bei einer derartigen Ausführungsvariante mit Ausgabe einer Empfehlung ist weiter bevorzugt keine Ortsabhängigkeit vorgesehen, sodass es keine Rolle spielt an welchem Ort sich das Kraftfahrzeug 2 befindet, wenn ein manueller Wechsel zwischen dem aktivierten Zustand und dem deaktivierten Zustand vorgenommen wird. Bevorzugt sind hier lediglich die Anzahl der manuellen Wechsel, das vorgegebene zweite Zeitintervall T2 und in den meisten Fällen zudem das vorgegebene erste Zeitintervall T1 relevant dafür, wann eine Empfehlung ausgegeben wird und wann nicht.

### BEZUGSZEICHENLISTE:

- 2: Kraftfahrzeug
- 4: Einparkhilfesystem
- 6: Umfeldsensorik
- 8: Datenverarbeitungseinheit
- 10: Speicher
- 12: Ausgabeeinrichtung
- 14: Taster
- 16: Bedieneinheit
- 18: Navigationssystem

## Patentansprüche

1. Verfahren zum Betrieb eines Kraftfahrzeugs (2) bei dem das Kraftfahrzeug (2) ein Einparkhilfesystem (4) mit einer Ausgabeeinrichtung (12) aufweist, welche in einem aktivierten Zustand akustische und/oder optische Informationen als Hilfe beim Einparken ausgibt und welche in einem deaktivierten Zustand diese Informationen nicht ausgibt,
wobei
- durch das Einparkhilfesystem (4) manuelle Wechsel zwischen dem aktivierten Zustand und dem deaktivierten Zustand erfasst werden,
- bei einer Erfassung einer vorgegebenen Wechselcharakteristik für manuelle Wechsel zwischen dem aktivierten Zustand und dem deaktivierten Zustand eine Empfehlung ausgegeben wird für einen Wechsel zwischen einem Automatik-Modus und einem Manuell-Modus des Einparkhilfesystems (4),
- im Automatik-Modus automatisch zwischen dem aktivierten Zustand und dem deaktivierten Zustand gewechselt wird und
- im Manuell-Modus kein automatischer Wechsel erfolgt.

2. Verfahren nach Anspruch 1,
wobei das Einparkhilfesystem (4) einen Fahrer lediglich durch die Ausgabe der akustischen und/oder optischen Informationen im aktivierten Zustand beim Einparken unterstützt und dass auf eine automatische oder teilautomatische Fahrzeugführung beim Einparken verzichtet wird.

3. Verfahren nach Anspruch 1 oder 2,
wobei in einem Lern-Modus des Einparkhilfesystems (4) Ausnahmen erlernt werden, bei denen entweder ausnahmsweise ein automatischer Wechsel zwischen dem aktivierten Zustand und dem deaktivierten Zustand erfolgt oder aber bei denen ausnahmsweise kein automatischer Wechsel zwischen dem aktivierten Zustand und dem deaktivierten Zustand erfolgt.

4. Verfahren nach Anspruch 3,
wobei im Lern-Modus des Einparkhilfesystems (4) durch das Einparkhilfesystem (4) manuelle Wechsel zwischen dem aktivierten Zustand und dem deaktivierten Zustand erfasst werden und dass auf der Basis erfasster manueller Wechsel die Ausnahmen erlernt werden.

5. Verfahren nach einem der Ansprüche 1 bis 4,
wobei lediglich diejenigen manuellen Wechsel zwischen dem aktivierten Zustand und dem deaktivierten Zustand erfasst werden, die innerhalb eines vorgegebenen ersten Zeitintervalls T1 nach einem automatischen Wechsel zwischen dem aktivierten Zustand und dem deaktivierten Zustand erfolgen.

6. Verfahren nach Anspruch 3 sowie nach Anspruch 4 oder 5,
wobei im Lern-Modus des Einparkhilfesystems (4) durch das Einparkhilfesystem (4) Ortsdaten zu einem Ort erfasst werden, an dem ein manueller Wechsel zwischen dem aktivierten Zustand und dem deaktivierten Zustand vorgenommen wird.

7. Verfahren nach Anspruch 6,
wobei im Lern-Modus des Einparkhilfesystems (4) ein Ort als Ausnahme erlernt wird, der zum wiederholten Male angefahren wird und an dem zum wiederholten Male ein manueller Wechsel zwischen dem aktivierten Zustand und dem deaktivierten Zustand vorgenommen wird.

8. Verfahren nach Anspruch 7,
wobei im Lernmodus des Einparkhilfesystems (4)
- standardmäßig kein automatischer Wechsel vom deaktivierten Zustand in den aktivierten Zustand erfolgt,
- Ausnahmen erlernt werden, bei denen ausnahmsweise ein automatischer Wechsel vom deaktivierten Zustand in den aktivierten Zustand erfolgt,
- Orte als Ausnahmen erlernt werden, die zum wiederholten Male angefahren werden und an denen zum wiederholten Male ein manueller Wechsel vom deaktivierten Zustand in den aktivierten Zustand vorgenommen wird, und
- ein automatischer Wechsel vom deaktivierten Zustand in den aktivierten Zustand erfolgt, wenn sich das Kraftfahrzeug (2) an einem als Ausnahme erlernten Ort einem Objekt in der Umgebung auf einen vorgegebenen Mindestabstand annähert.

9. Verfahren nach einem der Ansprüche 6 bis 8,
wobei im Lern-Modus eine Eingabeaufforderung ausgegeben wird, wenn an einem Ort ein manueller Wechsel zwischen dem aktivierten Zustand und dem deaktivierten Zustand erfasst wird, und wobei mit einer vorgegebenen Eingabe dieser Ort als Ausnahme festgelegt wird.

10. Kraftfahrzeug (2) eingerichtet zur Ausführung eines Verfahrens nach einem der vorherigen Ansprüche.

11. Computerprogrammprodukt enthaltend ein auf einer Datenverarbeitungseinheit (8), insbesondere einer Datenverarbeitungseinheit (8) eines Einparkhilfesystems (4) eines Kraftfahrzeugs (2), ausführbares Programm, welches nach einem Start ein Verfahren nach einem der vorherigen Ansprüche automatisch ausführt.

## Claims

1. Method for operating a motor vehicle (2) in which the motor vehicle (2) has a parking assist system (4) having an output apparatus (12) which in an activated state outputs acoustic and/or visual information items as assistance when parking and which in a deactivated state does not output these information items, wherein,
- by means of the parking assist system (4), manual changes between the activated state and the deactivated state are detected,
- when a predetermined change characteristic is detected for manual changes between the activated state and the deactivated state, a recommendation is output for a change between an automatic mode and a manual mode of the parking assist system (4),
- in the automatic mode a change between the activated state and the deactivated state is carried out automatically, and
- in the manual mode no automatic change takes place.

2. Method according to claim 1,
wherein the parking assist system (4) supports a driver only by outputting the acoustic and/or visual information items in the activated state when parking and wherein an automatic or partially automatic vehicle guidance is dispensed with when parking.

3. Method according to claim 1 or 2,
wherein in a learning mode of the parking assist system (4) exceptions are learned in which either exceptionally an automatic change between the activated state and the deactivated state takes place or in which exceptionally no automatic change between the activated state and the deactivated state takes place.

4. Method according to claim 3,
wherein in the learning mode of the parking assist system (4) by means of the parking assist system (4) manual changes between the activated state and the deactivated state are detected and wherein, on the basis of the detected manual changes, the exceptions are learned.

5. Method according to any one of claims 1 to 4,
wherein only those manual changes between the activated state and the deactivated state which take place within a predetermined first time period T1 after an automatic change between the activated state and the deactivated state are detected.

6. Method according to claim 3 and according to claim 4 or 5,
wherein, in the learning mode of the parking assist system (4), by means of the parking assist system (4) location data are detected relating to a location at which a manual change between the activated state and the deactivated state is performed.

7. Method according to claim 6,
wherein, in the learning mode of the parking assist system (4), a location is learned as an exception which is approached repeatedly and at which a manual change between the activated state and the deactivated state is repeatedly performed.

8. Method according to claim 7,
wherein, in the learning mode of the parking assist system (4),
- no automatic change from the deactivated state to the activated state takes place as standard,
- exceptions are learned in which exceptionally an automatic change from the deactivated state to the activated state takes place,
locations are learned as exceptions which are approached repeatedly and at which a manual change from the deactivated state to the activated state is performed repeatedly,
- an automatic change from the deactivated state to the activated state takes place when the motor vehicle (2) at a location which has been learned as an exception approaches an object in the environment at a predetermined minimum spacing.

9. Method according to any one of claims 6 to 8,
wherein in the learning mode an input request is output when at a location a manual change between the activated state and the deactivated state is detected, and wherein with a predetermined input this location is determined as an exception.

10. Motor vehicle (2) arranged to carry out a method according to any one of the preceding claims.

11. Computer program product containing a program which can be carried out on a data-processing unit (8), in particular a data-processing unit (8) of a parking assist system (4) of a motor vehicle (2), and which after a start-up automatically carries out a method according to any one of the preceding claims.

## Revendications

1. Procédé destiné au fonctionnement d'un véhicule automobile (2) dans lequel le véhicule automobile (2) présente un système d'aide au stationnement (4) avec un dispositif d'émission (12) qui émet dans un état activé des informations acoustiques et/ou optiques en tant qu'aide lors du stationnement et qui n'émet pas ces informations dans un état désactivé, dans lequel
- des passages manuels entre l'état activé et l'état désactivé sont détectés par le biais du système d'aide au stationnement (4),
- lors d'une détection d'une caractéristique de passage prédéterminée pour des passages manuels entre l'état activé et l'état désactivé une recommandation est émise pour un passage entre un mode automatique et un mode manuel du système d'aide au stationnement (4),
- en mode automatique le passage entre l'état activé et l'état désactivé s'effectue automatiquement et
- aucun passage automatique n'a lieu en mode manuel.

2. Procédé selon la revendication 1,
dans lequel le système d'aide au stationnement (4) assiste un conducteur lors du stationnement uniquement par le biais de l'émission des informations acoustiques et/ou optiques à l'état activé et en ce qu'il n'y a pas de conduite de véhicule automatique ou semi-automatique lors du stationnement.

3. Procédé selon la revendication 1 ou 2,
dans lequel dans un mode d'apprentissage du système d'aide au stationnement (4) des exceptions sont apprises, dans lesquelles soit, exceptionnellement, un passage automatique entre l'état activé et l'état désactivé a lieu soit dans lesquelles, exceptionnellement, aucun passage automatique entre l'état activé et l'état désactivé n'a lieu.

4. Procédé selon la revendication 3,
dans lequel en mode d'apprentissage du système d'aide au stationnement (4) des passages manuels entre l'état activé et l'état désactivé sont détectés par le biais du système d'aide au stationnement (4) et en ce que les exceptions sont apprises sur la base des passages manuels détectés.

5. Procédé selon l'une quelconque des revendications 1 à 4,
dans lequel seuls les passages manuels entre l'état activé et l'état désactivé sont détectés, qui sont effectués au sein d'un premier intervalle de temps T1 prédéterminé après un passage automatique entre l'état activé et l'état désactivé.

6. Procédé selon la revendication 3 ainsi que selon la revendication 4 ou 5,
dans lequel en mode d'apprentissage du système d'aide au stationnement (4) des données de localisation relatives à une localisation sont détectées par le biais du système d'aide au stationnement (4), localisation au niveau de laquelle un passage manuel entre l'état activé et l'état désactivé est effectué.

7. Procédé selon la revendication 6,
dans lequel en mode d'apprentissage du système d'aide au stationnement (4) une localisation est apprise comme une exception, où on se rend à plusieurs reprises et où un passage manuel entre l'état activé et l'état désactivé est effectué à plusieurs reprises.

8. Procédé selon la revendication 7,
dans lequel en mode d'apprentissage du système d'aide au stationnement (4)
- par défaut aucun passage automatique de l'état désactivé à l'état activé n'a lieu,
- des exceptions sont apprises, pour lesquelles, à titre exceptionnel, un passage automatique de l'état désactivé à l'état activé a lieu,
- des localisations sont apprises comme des exceptions où on se rend à plusieurs reprises et sur lesquels un passage manuel de l'état désactivé à l'état activé est effectué à plusieurs reprises, et
- un passage automatique de l'état désactivé à l'état activé a lieu lorsque le véhicule automobile (2) s'approche d'un objet dans l'environnement à une distance minimale prédéfinie au niveau d'une localisation apprise comme une exception.

9. Procédé selon l'une quelconque des revendications 6 à 8,
dans lequel en mode d'apprentissage une invite de commandes est émise lorsqu'un passage manuel entre l'état activé et l'état désactivé est détecté au niveau d'une localisation et dans lequel cette localisation est définie comme une exception avec une commande prédéfinie.

10. Véhicule automobile (2) conçu pour la réalisation d'un procédé selon l'une quelconque des revendications précédentes.

11. Produit de programme informatique contenant un programme réalisable sur une unité de traitement de données (8), en particulier une unité de traitement de données (8) d'un système d'aide au stationnement (4) d'un véhicule automobile (2), lequel programme réalise automatiquement après un démarrage un procédé selon l'une quelconque des revendications précédentes.
